# EUROPEAN PATENT SPECIFICATION

(11) **EP 3 210 099 B1**
(45) Date of publication and mention of the grant of the patent: **23.11.2022**
(21) Application number: 15791343.5
(22) Date of filing: 22.10.2015
(51) Int. Cl.: G06F 3/044

(54) **ARTICLE COMPRISING A CAPACITIVE TOUCH DEVICE**
ARTIKEL MIT EINER KAPAZITIVEN BERÜHRUNGSVORRICHTUNG
ARTICLE COMPRENANT UN DISPOSITIF TACTILE CAPACITIF

(30) Priority: 24.10.2014 GB 201418996
(43) Date of publication of application: 30.08.2017
(73) Proprietor: Novalia Ltd, Cambridge CB5 8RE (GB)
(72) Inventor: STONE, Kate, Cambridge Cambridgeshire CB4 2HA (GB)
(74) Representative: Piotrowicz, Pawel Jan Andrzej
(86) International application number: PCT/GB2015/053158
(87) International publication number: WO 2016/063062

(56) References cited:
- EP-A1- 2 416 338
- EP-A2- 1 293 928
- EP-A2- 2 568 364
- WO-A1-2013/128209
- WO-A1-2013/190884
- WO-A1-2014/001843
- CN-U- 203 179 400
- GB-A- 2 378 305
- GB-A- 2 501 570
- US-A1- 2013 135 548

## Description

### Field of the Invention

The present invention relates to an article which incorporates a capacitive touch device.

### Background

Capacitive touch devices can be formed by printing conductive ink on sheets of fibre-based material, such as card, or of plastic. WO 2013/128209 A1 and WO 2013/128208 A1 describe touch-sensitive input devices based on x-y touch.

Capacitive touch devices can be incorporated into articles, such as posters or books, as described, for example, in WO 2014/057251 A1.

Capacitive touch devices tend to be formed on flat surfaces. However, many forms of articles which could benefit from capacitive touch input are curved, sculpted or moulded (herein referred to as "uneven" or "non-flat" surfaces).

Examples of articles having uneven surfaces include globes (which are spherical) and toys. However, incorporating capacitive touch devices (which are flat) into articles which are not flat can be lead to surfaces which are non-responsive to user touch.

US 2009/0314550 A1 describes a capacitance sensitive touchpad that is formed as a plurality of electrodes disposed on a flat substrate. Spaces are created between electrodes which are cut from the substrate whereby the remaining edges of the substrate can then be brought closer together to form a three-dimensional shape, such as a sphere. This approach, however, can suffer one or more drawbacks. For example, conductive regions, due to the shape of the cut out, may be electrically isolated and so become separated from the rest of the touchpad. Moreover, the cut out or crease lines may need to be carefully positioned so as to form the three-dimensional shape. Furthermore, the substrate forms the body of the article and so may be damaged and/or may place limits on the types of surface finish, i.e. may result in an article which is weak and/or which has a poor appearance.

US 2013/13554 A1 describes a transparent capacitor apparatus includes a first transparent substrate including a first patterned conductive layer having a first conductive material located over the first transparent substrate; a dielectric layer located over the first patterned conductive layer; a second patterned conductive layer including a second conductive material located over the dielectric layer, wherein the second pattern is different from the first pattern; and a second transparent substrate located over the second patterned conductive layer. Portions of the first conductive material of the first patterned conductive layer overlap portions of the second conductive material of the second patterned conductive layer. The overlapping portions of the first and second conductive materials form matching patterned electrical conductor(s) having spatially matching conducting and non-conductive areas, the non-conductive areas of the first and second patterned conductive layers having encapsulated coalesced conductive material structures.

WO 2014/001843 A1 describes a tactile control arrangement for at least one electronic device including a touch control interface based on a capacitive sensor matrix and a electronic processing module associated to the sensor matrix and arranged to receive therefrom a plurality of electrical signals indicative of the touch or the pressure of an external body on at least one sensor of the matrix and consequent commands to be transmitted towards the above-mentioned electronic device is described. The sensor matrix comprises a plurality of active sensor electrodes and a corresponding plurality of conductive tracks for the connection of the active electrodes with the processing module. The sensor matrix is formed by a plurality of flexible functional layers including a first layer of conductive elastomeric material forming the active electrodes and a second layer of conductive elastomeric material forming the conductive tracks on a plane parallel to the layer of active electrodes, which first and second layers of conductive elastomeric material are separated by a flexible layer of insulating material comprising a non-conductive fabric bearing a plurality of vias at the active electrodes of the first layer and the corresponding conductive tracks of the second layer, wherein the layers of active electrodes and conductive tracks are deformed so as to directly contact through the vias of the non-conductive textile layer.

EP 2416338 A1 describes a capacitive touch member including a film-like or plate-like support that is formed of an insulating material and has a flexible shape or a stereoscopic shape, a detection electrode that is arranged on at least a part of one surface of the support and formed of a light transmissive conductive layer containing a carbon nano linear structure such as a carbon nanotube, and a lead-out wire that is led out from the detection electrode. A capacitive touch detection apparatus is constituted of the touch member and a capacitance detection circuit that is electrically connected to the detection electrode via the lead-out wire and detects a change in capacitance due approach or contact of a human body with respect to a touch surface. The detection electrode may be coated with a protective film, and a surface of the protective film may be used as a touch surface.

WO2013/128209 A1 describes touch-sensitive input device. The device comprises an opaque substrate having first and second opposite faces, a first set of electrodes disposed on the first face of the substrate, the electrodes generally extending in a first direction and spaced apart along a second, transverse direction, and a second set of electrodes disposed on the first or second face of the substrate, the electrodes generally extending in the second direction and spaced apart along the first direction, wherein the first and second sets of electrodes overlap.

EP1293928 A2 describes coordinate input device includes a coordinate input unit which performs a coordinate input operation by sliding an operating member on an operation surface which is formed in a convex shape, a concave shape, or the shape of a polyhedron. More specifically, the coordinate input device includes a capacitive sensor substrate formed by laminating two electrode layers with an upper substrate (dielectric layer) therebetween, each electrode layer including a plurality of electrodes arranged in a striped pattern. In addition, the coordinate input device also includes the operation surface formed in a convex (or concave) shape which is used for performing a coordinate input operation by sliding the operating member thereon.

EP 2568364 A2 describes input device includes an operation surface configured to be operated by a finger (operating body); a capacitive sensor disposed below an operation region 1a (including the operation surface), the capacitive sensor being capable of detecting an operation position of the finger; and a photosensor having a light-emitting element and a light-receiving element disposed below the operation region, the photosensor being capable of obtaining detection information when the light-receiving element receives reflected light corresponding to light (infrared light) emitted from the light-emitting element toward the operation surface, the detection information indicating detection of the finger.

GB 2 501 570 A discloses a touch-responsive interactive map or globe for delivering geographically specific data.

CN 203 179 400 U discloses an interactive touch-sensitive globe using either capacitive or resistive touch sensing.

### Summary

According to a first aspect of the present invention there is provided an article as specified in claim 1.

Optional features are defined in the dependent claims.

### Brief Description of the Drawings

Certain embodiments of the present invention will now be described, by way of example, with reference to the accompanying drawings, in which:
Figure 1 illustrates a globe;
Figure 2 illustrates a capacitive touch device comprising capacitive touch elements formed on a flat substrate;
Figure 3 illustrates a capacitive touch system which is incorporated into the globe shown in Figure 1;
Figure 4 shows overlapping capacitive elements;
Figure 5 illustrates a capacitive coupling formed by the overlapping capacitive elements; and
Figure 6 illustrates a portion of the globe.

### Detailed Description of Certain Embodiments

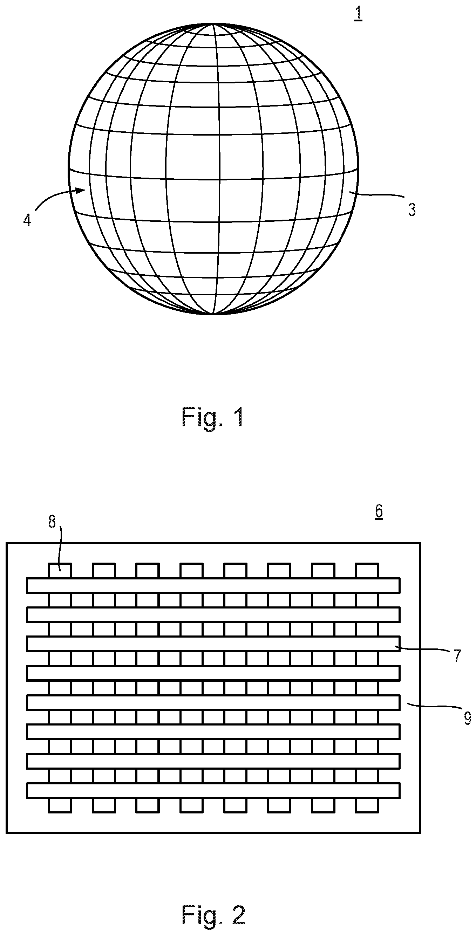

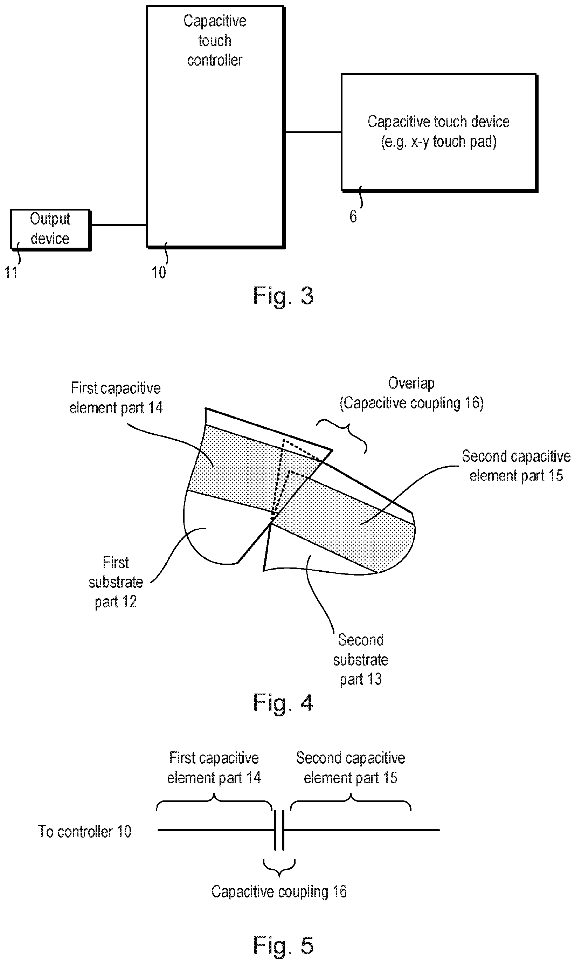

Referring to Figure 1, an article 1 in the form of a globe, for example of the world, is shown which incorporates a capacitive touch system 2 (Figure 3). The capacitive touch system 2 (Figure 3) can be used to make the globe interactive, for example, by stating the name of a country when it is touched by a user.

The article 1 has a housing 3 which is in this case is a non-flat housing portion. The housing 3 may comprise one or more moulded or extruded housing portions comprising a durable plastics material. The housing 3 has an outer surface 4 (which in this case is non-flat) and an inner surface 5 (which in this case is also non-flat).

Referring to Figure 2, a capacitive touch device 6 in the form of an x-y touch pad is shown. The capacitive touch device 6 comprises capacitive touch elements 7, 8 comprising rows 7 and columns 8 formed on a flat, flexible substrate 9. The substrate 9 maybe made from a cellulose fibre-based material, such as paper or card. The capacitive touch elements 7, 8 may comprise conductive ink, such as carbon-based conductive ink.

Figure 3 illustrates the capacitive touch system 2 which includes a capacitive touch controller 10, such as microcontroller, and the capacitive touch device 6. The row and columns can be formed as a chain or diamond-shaped elements. Suitable touch devices are described in WO 2013/128209 A1 and WO 2013/128208 A1 which are incorporated herein by reference.

The x-y touch pad can be disposed under the map. The capacitive touch system 2 includes one or more output devices 11. An output device 11 may be a sound-emitting device, such as a piezoelectric sounder. An output device 11 may be one or more light-emitting device, such as an LED, or a display. An output device 11 may comprise a wireless network interface, such as Bluetooth (RTM) transceiver.

The x-y touch pad can be disposed on the inside of a spherical shell 3 forming the globe.

Referring to Figures 4, 5 and 6, in order to accommodate a flat capacitive touch device and spherical globe shell, the substrate 9 of the capacitive touch device 6 is cut. Slits and/or cut outs are made in the sheet to allow it to be folded into a generally spherical or part-spherical shape.

The cuts may cut through tracks and/or capacitive touch elements. However, by overlapping strips or different parts of the substrate 12, 13, different capacitive touch elements parts 14, 15 (e.g. forming part of the same row or column) can be capacitively coupled as described in WO 2014/096772 A1.

Thus, a first capacitive element part 14 may be electrically isolated by the substrate, air gap and/or other dielectric material, such as a layer of non-conductive glue or ink, or intermediate sheet of material. Nevertheless, the first capacitive element part 14 is capacitively coupled to a second capacitive element part 15 via a capacitive coupling 16. An area, A, of overlap, may be of the order of a few square millimetres to a few tens of square millimetres. Reference is made to WO 2014/096772 A1 *ibid.*

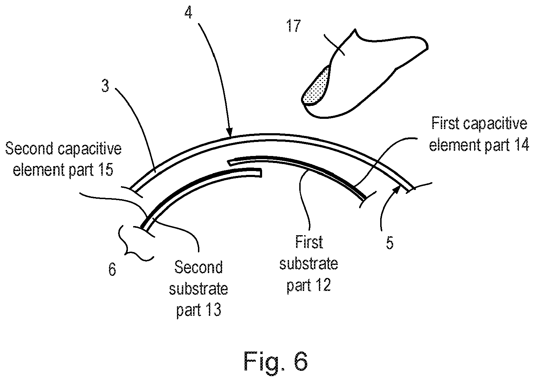

As shown in Figure 6, a user's finger 17 may be sensed by a first capacitive element part 15 and be coupled to an input pin (not shown) of the capacitive touch controller 10 via the capacitive coupling 16.

The capacitive touch device may be stuck with tape or adhesive to the inside of the globe. Preferably, the capacitive touch device is generally conformal with the inside surface 5.

It will be appreciated that many modifications may be made to the embodiments hereinbefore described.

The article need not be a globe, but may be another form of model or sculpted-like object. The article may be a toy, game or product packaging (e.g. secondary or tertiary packaging). The article may be a printed article. The article is preferably three-dimensional. First and second housing portions, which may be flat, curved or moulded (or "contoured") may overlie each other and the capacitive touch device may be interposed between first and second housing portions

The housing may comprise flat portions. For example, the housing may comprise a cube or other three-dimensional object having flat faces. The housing may comprise convex and/or concave portions

## Claims

1. An article comprising:
a capacitive touch device (6), comprising:
a first capacitive touch device part which comprises a first substrate part (12) supporting a first capacitive element part (14) which is electrically isolated;
a second capacitive touch device part which comprises a second substrate part (13) supporting a second capacitive element part (15); and
a controller (10) operatively coupled to the second capacitive element part of the capacitive touch device;
wherein the first and second substrate parts are parts of the same substrate separated by a cut; and
wherein the first and second capacitive touch device parts overlap so as to capacitively couple the first capacitive element part (14) and the second capacitive element part (15) thereby coupling the first capacitive element part to the controller via the second capacitive element part;
the article further comprising
a non-flat housing portion (3), wherein the capacitive touch device (6) is disposed adjacent to the housing portion.

2. An article according to claim 1, wherein the non-flat housing portion comprises at least part of a sphere.

3. An article according to claim 1 or 2, wherein the non-flat housing portion (3) comprises a moulded or extruded part.

4. An article according to any one of claims 1 to 3, wherein the non-flat housing portion (3) and the first and second substrate parts (12, 13) comprise different material.

5. An article according to claim 4, wherein the non-flat housing portion (3) comprises a plastic material.

6. An article according to claim 4 or 5, wherein the first and second substrate parts (12, 13) comprise a plastic material.

7. An article according to claim 4, 5 and 6, wherein the first and second substrate parts (12, 13) comprise a fibre-based material.

8. An article according to any one of claims 1 to 7, wherein the first and/or second capacitive element parts (14, 14) comprises conductive ink.

9. An article according to any one of claims 1 to 8, which is a model, such as a globe.

10. An article according to any one of claims 1 to 9, which is a toy.

## Patentansprüche

1. Artikel, umfassend:
eine kapazitive Berührungsvorrichtung (6), umfassend:
einen ersten kapazitiven Berührungsvorrichtungsteil, der einen ersten Substratteil (12) umfasst, der einen ersten kapazitiven Elementteil (14) trägt, der elektrisch isoliert ist;
einen zweiten kapazitiven Berührungsvorrichtungsteil, der einen zweiten Substratteil (13) umfasst, der einen zweiten kapazitiven Elementteil (15) trägt; und
eine Steuerung (10), die operativ mit dem zweiten kapazitiven Elementteil der kapazitiven Berührungsvorrichtung gekoppelt ist;
wobei der erste und der zweite Substratteil Teile desselben Substrats sind, die durch einen Schnitt getrennt sind; und
wobei sich der erste und der zweite kapazitive Berührungsvorrichtungsteil überlappen, um den ersten kapazitiven Elementteil (14) und den zweiten kapazitiven Elementteil (15) kapazitiv zu koppeln, wodurch der erste kapazitive Elementteil über den zweiten kapazitiven Elementteil mit der Steuerung gekoppelt ist;
wobei der Artikel ferner umfasst
einen nicht flachen Gehäuseabschnitt (3), wobei die kapazitive Berührungsvorrichtung (6) neben dem Gehäuseabschnitt angeordnet ist.

2. Artikel nach Anspruch 1, wobei der nicht flache Gehäuseabschnitt mindestens einen Teil einer Kugel umfasst.

3. Artikel nach Anspruch 1 oder 2, wobei der nicht flache Gehäuseabschnitt (3) ein geformtes oder extrudiertes Teil umfasst.

4. Artikel nach einem der Ansprüche 1 bis 3, wobei der nicht flache Gehäuseabschnitt (3) und der erste und der zweite Substratteil (12, 13) unterschiedliche Materialien umfassen.

5. Artikel nach Anspruch 4, wobei der nicht flache Gehäuseabschnitt (3) ein Kunststoffmaterial umfasst.

6. Artikel nach Anspruch 4 oder 5, wobei der erste und der zweite Substratteil (12, 13) ein Kunststoffmaterial umfassen.

7. Artikel nach Anspruch 4, 5 und 6, wobei der erste und der zweite Substratteil (12, 13) ein Material auf Faserbasis umfassen.

8. Artikel nach einem der Ansprüche 1 bis 7, wobei der erste und/oder der zweite kapazitive Elementteil (14, 14) leitfähige Tinte umfassen.

9. Artikel nach einem der Ansprüche 1 bis 8, der ein Modell, wie etwa ein Globus, ist.

10. Artikel nach einem der Ansprüche 1 bis 9, der ein Spielzeug ist.

## Revendications

1. Article comprenant :
un dispositif tactile capacitif (6), comprenant :
une première partie de dispositif tactile capacitif qui comprend une première partie de substrat (12) supportant une première partie d'élément capacitif (14) qui est électriquement isolée ;
une seconde partie de dispositif tactile capacitif qui comprend une seconde partie de substrat (13) supportant une seconde partie d'élément capacitif (15) ; et
un dispositif de commande (10) couplé fonctionnellement à la seconde partie d'élément capacitif du dispositif tactile capacitif ;
lesdites première et seconde parties de substrat étant des parties du même substrat séparées par une découpe ; et
lesdites première et seconde parties de dispositif tactile capacitif se chevauchant de façon à coupler de manière capacitive la première partie d'élément capacitif (14) et la seconde partie d'élément capacitif (15) couplant ainsi la première partie d'élément capacitif au dispositif de commande par l'intermédiaire de la seconde partie d'élément capacitif ;
l'article comprenant en outre
une partie de boîtier non plate (3), ledit dispositif tactile capacitif (6) étant disposé adjacent à la partie de boîtier.

2. Article selon la revendication 1, ladite partie de boîtier non plate comprenant au moins une partie d'une sphère.

3. Article selon la revendication 1 ou 2, ladite partie de boîtier non plate (3) comprenant une partie moulée ou extrudée.

4. Article selon l'une quelconque des revendications 1 à 3, ladite partie de boîtier non plate (3) et lesdites première et seconde parties de substrat (12, 13) comprenant un matériau différent.

5. Article selon la revendication 4, ladite partie de boîtier non plate (3) comprenant un matériau plastique.

6. Article selon la revendication 4 ou 5, lesdites première et seconde parties de substrat (12, 13) comprenant un matériau plastique.

7. Article selon les revendications 4, 5 et 6, lesdites première et seconde parties de substrat (12, 13) comprenant un matériau à base de fibres.

8. Article selon l'une quelconque des revendications 1 à 7, lesdites première et/ou seconde parties d'élément capacitif (14, 14) comprenant de l'encre conductrice.

9. Article selon l'une quelconque des revendications 1 à 8, qui est un modèle, tel qu'un globe.

10. Article selon l'une quelconque des revendications 1 à 9, qui est un jouet.
